# EUROPEAN PATENT APPLICATION

(11) **EP 3 062 135 A1**
(43) Date of publication of application: **31.08.2016**
(21) Application number: 14862811.8
(22) Date of filing: 14.11.2014
(51) Int. Cl.: G02B 6/245

(54) **OPTICAL FIBER STRIPPER AND COMMUNICATION DEVICE**

(30) Priority: 15.11.2013 CN 201310576417
(71) Applicant: Huawei Technologies Co., Ltd., Longgang District Shenzhen, Guangdong 518129 (CN)
(72) Inventor: SHI, Deyi, Shenzhen Guangdong 518129 (CN); YANG, Anliang, Shenzhen Guangdong 518129 (CN); WU, Feng, Shenzhen Guangdong 518129 (CN); ZHANG, Yan, Shenzhen Guangdong 518129 (CN)
(74) Representative: Körber, Martin Hans
(86) International application number: PCT/CN2014/091071
(87) International publication number: WO 2015/070786

(57) **Abstract**

The present invention provides an optical fiber stripping apparatus and a communications device. In the optical fiber stripping apparatus, a pin hole is disposed at one side of a connecting part, a spring pin is disposed on a base, a second surface of the connecting part is in contact with the base, at least one hook is disposed on the second surface of the connecting part, and the at least one hook is configured to buckle a hook slot of the base; and a first surface of the base is in contact with the second surface of the connecting part, and the hook slot corresponding to the at least one hook is disposed on the first surface of the base, where when the at least one hook buckles the hook slot of the base, a dowel pin of the spring pin springs up, and the dowel pin fits in the pin hole at the one side of the connecting part to fasten positions of the connecting part and the base, and when the dowel pin is pressed down, the connecting part can be disassembled from the base, which simplifies a process of mounting and disassembling the optical fiber stripping apparatus and improves efficiency in mounting and disassembling the optical fiber stripping apparatus.

## Description

This application claims priority to Chinese Patent Application No. 201310576417.8, filed with the Chinese Patent Office on November 15, 2013 and entitled "OPTICAL FIBER STRIPPING APPARATUS AND COMMUNICATIONS DEVICE", which is incorporated herein by reference in its entirety.

### TECHNICAL FIELD

The present invention relates to communications technologies, and in particular, to an optical fiber stripping apparatus and a communications device.

### BACKGROUND

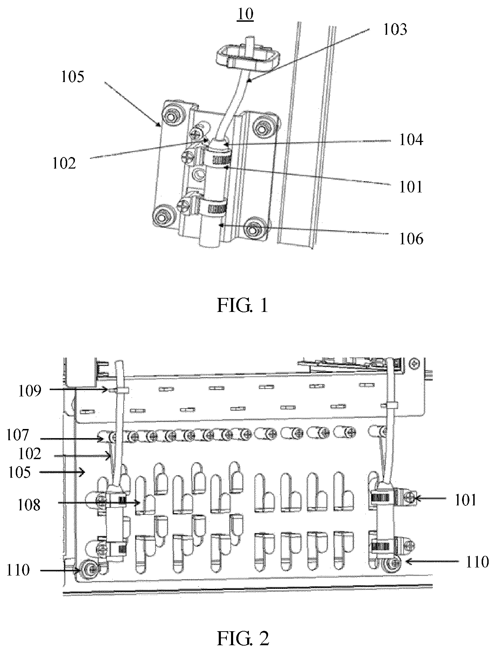

With the development of optical fiber technologies, an optical fiber stripping apparatus is also widely applied to communications devices. FIG. 1 is a schematic structural diagram of an optical fiber stripping apparatus in the prior art, and as shown in FIG. 1, the optical fiber stripping apparatus 10 includes: a hose clamp 101, a strength member 102, a fiber protection tube 103, insulation tape 104, and a fastening plate 105. As shown in FIG. 1, an optical fiber 106 is fastened to the optical fiber stripping apparatus 10 by using the hose clamp 101, and a stripped pigtail is inserted into the fiber protection tube 103. Because there is a gap between the fiber protection tube 103 and the optical fiber, to protect an exposed optical fiber, the optical fiber at the gap needs to be manually bound by using the insulation tape 104 in the prior art. In a general case, a screw on the fastening plate 105 of the optical fiber stripping apparatus 10 is connected to the inside of a cabinet in a rigid manner. For example, as shown in FIG. 1, the fastening plate 105 is connected to the inside of the cabinet in a rigid manner by using four screws. FIG. 2 is a schematic diagram of a connection structure of an optical fiber stripping apparatus in the prior art, and the connection structure further includes: a strength member fastening post 107, a fastening clamping jaw 108 for a hose clamp 101, a clip 109, and a screw 110. The strength member fastening post 107 is disposed on a fastening plate 105, and the strength member fastening post 107 is configured to fasten a strength member 102 in an optical cable. The fastening clamping jaw 108 for the hose clamp 101 is disposed on the fastening plate 105, and as shown in FIG. 2, multiple fastening clamping jaws 108 for the hose clamp 101 may be simultaneously disposed on the one fastening plate 105 to fasten multiple optical fiber stripping apparatuses. As shown in FIG. 2, in the prior art, the multiple optical fiber stripping apparatuses are generally disposed on the one fastening plate 105, and the fastening plate 105 is connected to the inside of a cabinet in a communications device in a rigid manner by using multiple screws 110.

However, when a single optical fiber stripping apparatus needs to be disassembled for repair, multiple screws need to be disassembled because of the structure in the prior art, which causes a tedious and complex disassembly process, and in the disassembly process, normal use of another optical fiber stripping apparatus disposed on a same fastening plate is affected.

### SUMMARY

The present invention provides an optical fiber stripping apparatus and a communications device, which are used to improve efficiency in mounting and disassembling the optical fiber stripping apparatus.

A first aspect of the present invention provides an optical fiber stripping apparatus, including: a hose clamp, a connecting part, a spring pin, a base, and a fiber protection tube, where
the hose clamp is disposed on one end of a first surface of the connecting part, and the hose clamp is configured to fasten an optical cable;
a first fastening part is disposed in the middle of the first surface of the connecting part, and the first fastening part is configured to fasten a strength member of the optical cable after the optical cable is stripped;
a second fastening part is disposed on another end of the first surface of the connecting part, the second fastening part is configured to fasten at least one of the fiber protection tube, and the at least one of the fiber protection tube is configured to protect a pigtail;
a second surface of the connecting part is in contact with the base, at least one hook is disposed on the second surface of the connecting part, and the at least one hook is configured to buckle a hook slot of the base;
a first surface of the base is in contact with the second surface of the connecting part, and the hook slot corresponding to the at least one hook is disposed on the first surface of the base; and
the spring pin is disposed on the first surface of the base, and the spring pin has one dowel pin, where when the at least one hook buckles the hook slot of the base, the dowel pin springs up, and the dowel pin fits in a pin hole at one side of the connecting part to fasten positions of the connecting part and the base, and
when the dowel pin is pressed down, the connecting part can be disassembled from the base.

With reference to the first aspect, in a first possible implementation manner, the optical fiber stripping apparatus further includes: an upper cover, where:
at least one screw is disposed on the upper cover, and the upper cover is connected to the first fastening part in a rigid manner by using the at least one screw and is configured to protect the exposed pigtail; and
a tapped hole corresponding to the screw is disposed on a plane that is of the first fastening part and that is in contact with the upper cover, and the tapped hole is configured to fasten to the at least one screw of the upper cover.

With reference to the first aspect or the first possible implementation manner of the first aspect, in a second possible implementation manner, the base is in a convex structure, and the first surface of the base includes: a first subordinate surface, a second subordinate surface, and a third subordinate surface;
the first subordinate surface is a convex surface, and the second subordinate surface and the third subordinate surface are concave surfaces;
the first subordinate surface is in contact with the second surface of the connecting part, and the at least one hook slot is disposed on the first subordinate surface;
the spring pin is riveted on the first subordinate surface, and the spring pin has one dowel pin, where when the at least one hook buckles the hook slot of the base, the dowel pin springs up, and the dowel pin fits in the pin hole at the one side of the connecting part to fasten the positions of the connecting part and the base, and when the dowel pin is pressed down, the connecting part can be disassembled from the base;
a screw is disposed on the second subordinate surface and is configured to connect the base and a mounting plate in a rigid manner; and
a screw is disposed on the third subordinate surface and is configured to connect the base and the mounting plate in a rigid manner.

A second aspect of the present invention provides a communications device, including the optical fiber stripping apparatus described in the foregoing first aspect or any possible implementation manner of the first aspect, a cabinet, and a mounting plate, where
at least one group of tapped holes are disposed on the mounting plate, the at least one group of tapped holes are configured to fasten to at least one group of screws disposed on a base of the optical fiber stripping apparatus to fasten the optical fiber stripping apparatus to the mounting plate, and the mounting plate is connected to the inside of the cabinet in a rigid manner.

According to the optical fiber stripping apparatus provided in the embodiments, a pin hole is disposed at one side of a connecting part, a spring pin is disposed on a base, a hose clamp is disposed on one end of a first surface of the connecting part, and the hose clamp is configured to fasten an optical cable; a first fastening part is disposed in the middle of the first surface of the connecting part, and the first fastening part is configured to fasten a strength member of the optical cable after the optical cable is stripped; a second fastening part is disposed on another end of the first surface of the connecting part, the second fastening part is configured to fasten at least one of the fiber protection tube, and the at least one of the fiber protection tube is configured to protect a pigtail; a second surface of the connecting part is in contact with the base, at least one hook is disposed on the second surface of the connecting part, and the at least one hook is configured to buckle a hook slot of the base; and a first surface of the base is in contact with the second surface of the connecting part, and the hook slot corresponding to the at least one hook is disposed on the first surface of the base, where when the at least one hook buckles the hook slot of the base, a dowel pin of the spring pin springs up, and the dowel pin fits in the pin hole at the one side of the connecting part to fasten positions of the connecting part and the base, and when the dowel pin is pressed down, the connecting part can be disassembled from the base, which simplifies a process of mounting and disassembling the optical fiber stripping apparatus and improves efficiency in mounting and disassembling the optical fiber stripping apparatus.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic structural diagram of an optical fiber stripping apparatus in the prior art;
FIG. 2 is a schematic diagram of a connection structure of an optical fiber stripping apparatus in the prior art;
FIG. 3 is a schematic structural diagram of an optical fiber stripping apparatus according to an embodiment of the present invention;
FIG. 4 is a schematic structural diagram of another optical fiber stripping apparatus according to an embodiment of the present invention;
FIG. 5 is a schematic structural diagram of a base according to an embodiment of the present invention;
FIG. 6 is a schematic diagram of a process of mounting an optical fiber stripping apparatus according to an embodiment of the present invention;
FIG. 7 is a schematic diagram of a process of disassembling an optical fiber stripping apparatus according to an embodiment of the present invention; and
FIG. 8 is a schematic diagram of a mounting structure of still another optical fiber stripping apparatus according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

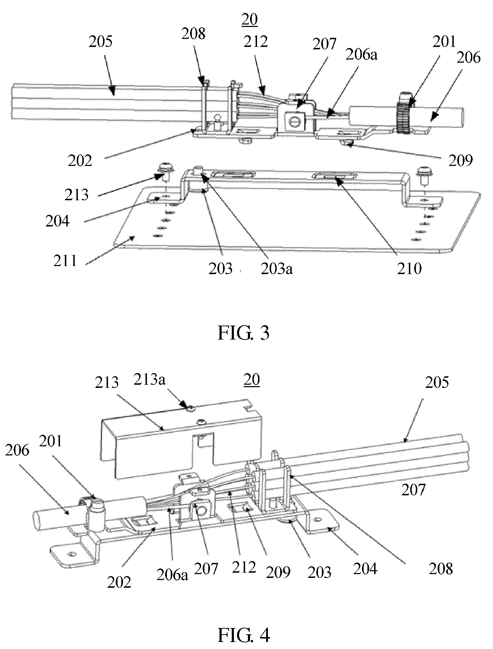

FIG. 3 is a schematic structural diagram of an optical fiber stripping apparatus 20 according to an embodiment of the present invention. As shown in FIG. 3, the optical fiber stripping apparatus 20 includes: a hose clamp 201, a connecting part 202, a spring pin 203, a base 204, and a fiber protection tube 205.

The hose clamp 201 is disposed on one end of a first surface of the connecting part 202, and the hose clamp 201 is configured to fasten an optical cable 206.

A first fastening part 207 is disposed in the middle of the first surface of the connecting part 202, and the first fastening part 207 is configured to fasten a strength member 206a of the optical cable 206 after the optical cable 206 is stripped.

A second fastening part 208 is disposed on another end of the first surface of the connecting part 202, the second fastening part 208 is configured to fasten at least one of the fiber protection tube 205, and the at least one of the fiber protection tube 205 is configured to protect a pigtail 212.

A second surface of the connecting part 202 is in contact with the base 204, at least one hook 209 is disposed on the second surface of the connecting part 202, and the at least one hook 209 is configured to buckle a hook slot 210 of the base 204.

A first surface of the base 204 is in contact with the second surface of the connecting part 202, and the hook slot 210 corresponding to the at least one hook 209 is disposed on the first surface of the base 204.

The spring pin 203 is disposed on the first surface of the base 204, the spring pin 203 has one dowel pin 203a, and when the at least one hook 209 buckles the hook slot 210 of the base 204, the dowel pin 203a springs up, and the dowel pin 203a fits in a pin hole at one side of the connecting part 202 to fasten positions of the connecting part 202 and the base 204.

Specifically, the base 204 is fastened to a mounting plate 211 inside a communications device by using a screw.

When the dowel pin 203a is pressed down, the connecting part 202 can be disassembled from the base 204.

According to the optical fiber stripping apparatus provided in this embodiment, a pin hole is disposed at one side of a connecting part, a spring pin is disposed on a base, a hose clamp is disposed on one end of a first surface of the connecting part, and the hose clamp is configured to fasten an optical cable; a first fastening part is disposed in the middle of the first surface of the connecting part, and the first fastening part is configured to fasten a strength member of the optical cable after the optical cable is stripped; a second fastening part is disposed on another end of the first surface of the connecting part, the second fastening part is configured to fasten at least one of the fiber protection tube, and the at least one of the fiber protection tube is configured to protect a pigtail; a second surface of the connecting part is in contact with the base, at least one hook is disposed on the second surface of the connecting part, and the at least one hook is configured to buckle a hook slot of the base; and a first surface of the base is in contact with the second surface of the connecting part, and the hook slot corresponding to the at least one hook is disposed on the first surface of the base, where when the at least one hook buckles the hook slot of the base, a dowel pin of the spring pin springs up, and the dowel pin fits in the pin hole at the one side of the connecting part to fasten positions of the connecting part and the base, and when the dowel pin is pressed down, the connecting part can be disassembled from the base, which simplifies a process of mounting and disassembling the optical fiber stripping apparatus and improves efficiency in mounting and disassembling the optical fiber stripping apparatus.

Further, to protect an optical fiber between a hose clamp and a fiber protection tube, in the prior art, the optical fiber needs to be manually bound by using insulation tape. However, in this way, additional costs of mounting a pigtail are increased and efficiency in mounting the pigtail is reduced. To resolve this problem, FIG. 4 is a schematic structural diagram of another optical fiber stripping apparatus according to an embodiment of the present invention. As shown in FIG. 4, the optical fiber stripping apparatus further includes an upper cover 213.

At least one screw 213a is disposed on the upper cover, and the upper cover is connected to the first fastening part 207 in a rigid manner by using the at least one screw 213a and is configured to protect the exposed pigtail 212.

A tapped hole corresponding to the screw is disposed on a plane that is of the first fastening part and that is in contact with the upper cover, and the tapped hole is configured to fasten to the at least one screw 213a of the upper cover 213.

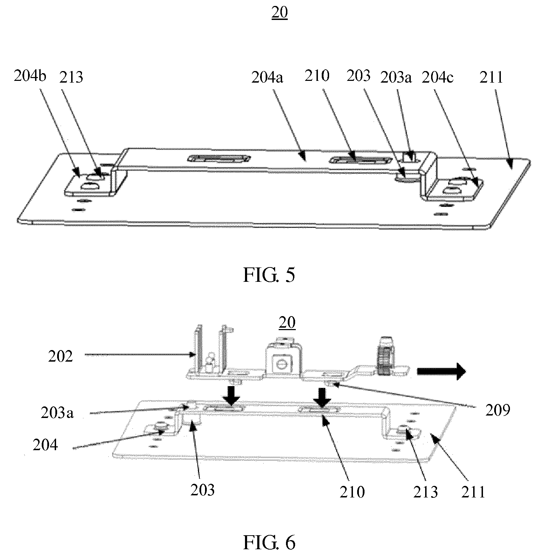

Further, FIG. 5 is a schematic structural diagram of a base according to an embodiment of the present invention. As shown in FIG. 5, the base 204 is in a convex structure, and the first surface of the base includes: a first subordinate surface 204a, a second subordinate surface 204b, and a third subordinate surface 204c, where
the first subordinate surface 204a is a convex surface, the second subordinate surface 204b is a concave surface, and the third subordinate surface 204c is a concave surface;
the first subordinate surface 204a is in contact with the second surface of the connecting part 202, and the hook slot 210 corresponding to the at least one hook is disposed on the first subordinate surface 204a;
the spring pin 203 is riveted on the first subordinate surface 204a, and the spring pin 203 has one dowel pin 203a, where when the at least one hook 209 buckles the hook slot 210 of the first subordinate surface 204a, the dowel pin 203a springs up, and the dowel pin 203a fits in the pin hole at the one side of the connecting part 202 to fasten the positions of the connecting part 202 and the base 204, and when the dowel pin 203a is pressed down, the connecting part 202 can be disassembled from the base 204;
a screw 213 is disposed on the second subordinate surface 204b and is configured to connect the base 204 and the mounting plate 211 in a rigid manner; and
a screw 213 is disposed on the third subordinate surface 204c and is configured to connect the base 204 and the mounting plate 211 in a rigid manner.

The following uses an embodiment to describe how to mount the optical fiber stripping apparatus provided in this embodiment of the present invention on a mounting plate in a cabinet or disassemble the optical fiber stripping apparatus from a mounting plate. FIG. 6 is a schematic diagram of a process of mounting an optical fiber stripping apparatus according to an embodiment of the present invention. As shown in FIG. 6, a base 204 on which a spring pin 203 is riveted is first fastened to a mounting plate 211 in a cabinet by using a screw 213; along an arrow direction that is shown in FIG. 6 and that is perpendicular to a plane of the mounting plate 211, a connecting part 202 of the optical fiber stripping apparatus is buckled on the base 204 by using two hooks 209, and the spring pin 203 is used to limit a position of the optical fiber stripping apparatus. Further, during mounting, the optical fiber stripping apparatus is slid rightwards along an arrow direction that is shown in FIG. 6 and that is parallel to the plane of the mounting plate 211, and the two hooks 209 are snapped in hook slots 210 on the base until a dowel pin 203a of the spring pin 203 springs up to limit a position of the connecting part 202 of the optical fiber stripping apparatus. Further, referring to FIG. 4, after an optical fiber is stripped, an upper cover mounted with a screw is fastened to a first fastening part to protect a stripped pigtail.

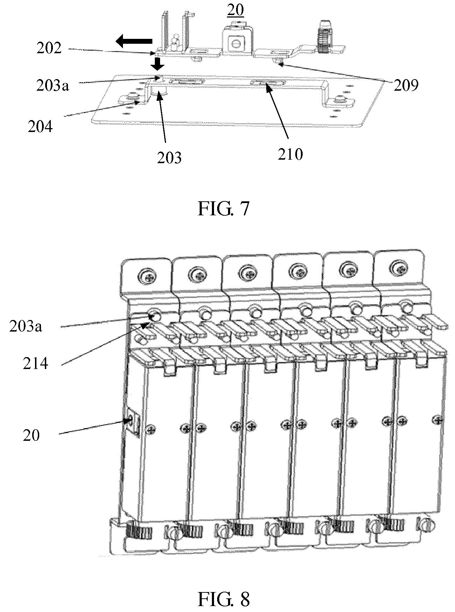

FIG. 7 is a schematic diagram of a process of disassembling an optical fiber stripping apparatus according to an embodiment of the present invention. As shown in FIG. 7, during disassembly, a small pointed tool is used to press down a dowel pin 203a of a spring pin 203 along an arrow direction perpendicular to a plane of a mounting plate 211, and in addition, a connecting part 202 of the optical fiber stripping apparatus is slid leftwards along an arrow direction that is shown in FIG. 7 and that is parallel to the plane of the mounting plate 211 until two hooks 209 are separated from two hook slots 210 of a base 204.

Further, FIG. 8 is a schematic diagram of a mounting structure of still another optical fiber stripping apparatus according to an embodiment of the present invention. As shown in FIG. 8, when multiple optical fiber stripping apparatuses 20 are mounted side by side, and when any one of the optical fiber stripping apparatuses needs to be maintained, the apparatus can be disassembled by just pressing down a dowel pin 203a of a spring pin, and maintenance can be performed without affecting another apparatus. Further, as shown in FIG. 8, a pin hole 214 is disposed on one end of a connecting part 202, and a shape of the pin hole 214 is fitted with a shape of the dowel pin 203a. For example, if the dowel pin 203a is a cylinder, the pin hole 214 is a semicircular pin hole, and a radius of the semicircle is the same as a radius of the cylinder, provided that the dowel pin 203a fits in the pin hole 214 when the dowel pin 203a springs up. It should be noted that, in this embodiment of the present invention, provided it can be ensured that the dowel pin 203a can fit in the pin hole 214, a specific shape of the pin hole 214 is not limited in this embodiment of the present invention.

An embodiment of the present invention further provides a communications device, where the communications device may be an optical distribution network (Optical distribution network) device such as an optical distribution frame (Optical distribution frame), a fiber cross-connection cabinet (Fiber cross-connection cabinet), a splitting and splicing closure (SSC), or a fiber division box (Fiber division box). Further, the communications device includes the fiber stripping apparatus described in the foregoing embodiments, a cabinet, and a mounting plate.

At least one group of tapped holes are disposed on the mounting plate, the at least one group of tapped holes are configured to fasten to at least one group of screws disposed on a base of the optical fiber stripping apparatus to fasten the optical fiber stripping apparatus to the mounting plate, and the mounting plate is connected to the inside of the cabinet in a rigid manner.

According to the communications device provided in this embodiment, at least one optical fiber stripping apparatus in the foregoing embodiments is disposed inside the communications device; and in the optical fiber stripping apparatus: a pin hole is disposed on one side of a connecting part, a spring pin is disposed on a base, a hose clamp is disposed on one end of a first surface of the connecting part, and the hose clamp is configured to fasten an optical cable; a first fastening part is disposed in the middle of the first surface of the connecting part, and the first fastening part is configured to fasten a strength member of the optical cable after the optical cable is stripped; a second fastening part is disposed on another end of the first surface of the connecting part, the second fastening part is configured to fasten at least one of the fiber protection tube, and the at least one of the fiber protection tube is configured to protect a pigtail; a second surface of the connecting part is in contact with the base, at least one hook is disposed on the second surface of the connecting part, and the at least one hook is configured to buckle a hook slot of the base; and a first surface of the base is in contact with the second surface of the connecting part, and the hook slot corresponding to the at least one hook is disposed on the first surface of the base, where when the at least one hook buckles the hook slot of the base, a dowel pin of the spring pin springs up, and the dowel pin fits in the pin hole at the one side of the connecting part to fasten positions of the connecting part and the base, and when the dowel pin is pressed down, the connecting part can be disassembled from the base, which simplifies a process of mounting and disassembling the optical fiber stripping apparatus and improves efficiency in mounting and disassembling the optical fiber stripping apparatus.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. An optical fiber stripping apparatus, comprising: a hose clamp, a connecting part, a spring pin, a base, and at least one fiber protection tube, wherein:
the hose clamp is disposed on one end of a first surface of the connecting part, and the hose clamp is configured to fasten an optical cable;
a first fastening part is disposed in the middle of the first surface of the connecting part, and the first fastening part is configured to fasten a strength member of the optical cable after the optical cable is stripped;
a second fastening part is disposed on another end of the first surface of the connecting part, the second fastening part is configured to fasten the at least one of fiber protection tube, and the at least one of fiber protection tube is configured to protect a pigtail;
a second surface of the connecting part is in contact with the base, at least one hook is disposed on the second surface of the connecting part, and the at least one hook is configured to buckle a hook slot of the base;
a first surface of the base is in contact with the second surface of the connecting part, and the hook slot corresponding to the at least one hook is disposed on the first surface of the base; and
the spring pin is disposed on the first surface of the base, and the spring pin has one dowel pin, wherein when the at least one hook buckles the hook slot of the base, the dowel pin springs up, and the dowel pin fits in a pin hole at one side of the connecting part to fasten positions of the connecting part and the base, and
when the dowel pin is pressed down, the connecting part can be disassembled from the base.

2. The optical fiber stripping apparatus according to claim 1, further comprising:
an upper cover, wherein:
at least one screw is disposed on the upper cover, and the upper cover is connected to the first fastening part in a rigid manner by using the at least one screw and is configured to protect the exposed pigtail; and
a tapped hole corresponding to the screw is disposed on a plane that is of the first fastening part and that is in contact with the upper cover, and the tapped hole is configured to fasten to the at least one screw of the upper cover.

3. The optical fiber stripping apparatus according to claim 1 or 2, wherein the base is in a convex structure, and the first surface of the base comprises: a first subordinate surface, a second subordinate surface, and a third subordinate surface;
the first subordinate surface is a convex surface, and the second subordinate surface and the third subordinate surface are concave surfaces;
the first subordinate surface is in contact with the second surface of the connecting part, and the at least one hook slot is disposed on the first subordinate surface;
the spring pin is riveted on the first subordinate surface, and the spring pin has one dowel pin, wherein when the at least one hook buckles the hook slot of the first subordinate surface, the dowel pin springs up, and the dowel pin fits in the pin hole at the one side of the connecting part to fasten the positions of the connecting part and the base, and when the dowel pin is pressed down, the connecting part can be disassembled from the base;
a screw is disposed on the second subordinate surface and is configured to connect the base and a mounting plate in a rigid manner; and
a screw is disposed on the third subordinate surface and is configured to connect the base and the mounting plate in a rigid manner.

4. A communications device, comprising the optical fiber stripping apparatus according to any one of claims 1 to 3, a cabinet, and a mounting plate, wherein:
at least one group of tapped holes are disposed on the mounting plate, the at least one group of tapped holes are configured to fasten to at least one group of screws disposed on a base of the optical fiber stripping apparatus to fasten the optical fiber stripping apparatus to the mounting plate, and the mounting plate is connected to the inside of the cabinet in a rigid manner.
